# EUROPÄISCHE PATENTSCHRIFT

(11) **EP 1 925 924 B1**
(45) Veröffentlichungstag und Bekanntmachung des Hinweises auf die Patenterteilung: **22.07.2009**
(21) Anmeldenummer: 06124505.6
(22) Anmeldetag: 21.11.2006
(51) Int. Cl.: G01K 17/06

(54) **Low-cost-Heizkostenverteiler**
Low cost heat cost allocator
Répartiteur de frais de chauffage à bas coût

(43) Veröffentlichungstag der Anmeldung: 28.05.2008
(73) Patentinhaber: QUNDIS GmbH, 99974 Mühlhausen (DE)
(72) Erfinder: Dobeneck, Wolfgang, 99996 Urbach (DE); Bendlin, Georg, 99974 Mühlhausen (DE); Leipold, Jörg, 99974 Mühlhausen (DE); Menge, Andreas, 99974 Mühlhausen (DE)
(74) Vertreter: Weise, Wolfgang

(56) Entgegenhaltungen:
- EP-A- 1 605 238
- DE-A1- 10 147 207
- DE-U1- 8 219 285
- DE-U1- 20 319 708
- DE-U1- 29 515 173

## Beschreibung

Die Erfindung betrifft einen Heizkostenverteiler zur Erfassung der von einem Heizkörper in einem Raum abgegebenen Wärmemenge mit einem Gehäuse und einer an der Heizkörperoberfläche montierbaren wärmeleitfähigen Trägerplatte, welche eine Rückwand für das Gehäuse bildet und einer innerhalb des Gehäuses angeordneten Leiterplatte, die einen Heizkörpertemperatursensor und einen Raumlufttemperatursensor aufweist.

Ein solcher Heizkostenverteiler ist beispielsweise aus dem Gebrauchsmuster DE 20 2004 007 802 U1 bekannt. Dieses beschreibt einen elektronischen Heizkostenverteiler mit einem Gehäuse, welches eine raumseitige Gehäusevorderwand und eine heizkörperseitige Gehäuserückwand aufweist. Die aus einem wärmeleitfähigen Material bestehende Gehäuserückwand ist an einer Heizkörperoberfläche montierbar und ist im montierten Zustand thermisch leitend mit dem Heizkörper verbunden. Innerhalb des Gehäuses ist eine Leiterplatte angeordnet, die Temperatursensoren zur Messung der Heizkörpertemperatur und der Raumlufttemperatur aufweist.

Beide Temperatursensoren sind auf einer Plattenfläche der Leiterplatte angeordnet. Die Leiterplatte ist schräg in Längsrichtung des Gehäuses angeordnet, wobei der Heizkörpertemperatursensor sich in unmittelbarer Nähe der heizkörperseitigen Gehäuserückwand und der Raumlufttemperatursensor sich in unmittelbarer Nähe der Gehäusevorderwand befindet. Da beide Temperatursensoren auf der dem Heizkörper zugewandten Plattenfläche der Leiterplatte angeordnet sind, ist der Raumlufttemperatursensor direkt der vom Heizkörper abgestrahlten Wärme ausgesetzt.

Zur Abschirmung des Raumlufttemperatursensors gegenüber der vom Heizkörper abgestrahlten Wärme ist ein thermisch isolierendes und hitzebeständiges Element zwischen der Gehäuserückseite und dem Raumlufttemperatursensor vorgesehen. Die Verwendung und Fixierung eines solchen thermisch isolierenden Elements erhöht jedoch die Herstellungskosten für einen Heizkostenverteiler.

Der Erfindung liegt die Aufgabe zu Grunde, einen Heizkostenverteiler vorzuschlagen, der einfach und kostengünstig herstellbar ist, wobei gewährleistet sein soll, dass die Temperatursensoren für ihre Funktion möglichst vorteilhaft auf der Leiterplatte positioniert sind.

Diese Aufgabe wird erfindungsgemäss gelöst durch die Merkmale des Patentanspruches 1.

Die Erfindung zeichnet sich insbesondere dadurch aus, dass durch die senkrechte Anordnung der Leiterplatte zu der Trägerplatte die Messkontakte für die Temperatursensoren auf verschiedenen, vorzugsweise auf gegenüberliegenden Stirnflächen der Leiterplatte positioniert werden können, wobei der Messkontakt für den Heizkörpertemperatursensor auf einer der Trägerplatte zugewandten Stirnfläche der Leiterplatte und der Messkontakt für den Raumlufttemperatursensor auf einer dem Gehäuse zugewandten Stirnfläche der Leiterplatte angeordnet sind. Die Messkontakte stellen metallisierte wärmeleitfähige Kopplungsflächen für die Wärmeleitung an den Heizkörper- bzw. Raumlufttemperatursensor dar.

Vorzugsweise ist die Leiterplatte mehrschichtig aufgebaut, wobei im Bereich der Mess- und Anschlusskontakte zwischen den elektrisch isolierenden Schichten der Leiterplatte Wärme leitende Bereiche z. B. aus Kupfer vorgesehen sind. Diese sind auf die Geometrie der Temperatursensoren abgestimmt, damit eine gute und gleichmässige Durchwärmung der Leiterplatte im Bereich des Temperatursensoren erhalten wird. Die Temperatursensoren sind beispielsweise SMD-Bauelemente.

Zur thermischen Entkopplung der Wärmeleitenden Bereiche von der restlichen Leiterplatte ist die Geometrie der Leiterplatte vorzugsweise so gestaltet, dass die Wärmeleitenden Bereiche nur über zwei dünne Stege im Basismaterial der Leiterplatte gehalten werden.

Die erfindungsgemässe Positionierung des Messkontakts des Raumlufttemperatursensors auf einer dem Gehäuse zugewandten, d. h. auf einer dem Trägerelement abgewandten Stirnfläche der Leiterplatte, hat den Vorteil, dass eine korrekte Messung der Raumlufttemperatur möglich ist, ohne dass ein thermisch isolierendes Element zur Abschirmung der Wärmestrahlung notwendig ist. Dadurch kann der Heizkostenverteiler sehr kostengünstig hergestellt werden. Dabei können die SMD-Bauelemente mit anderen Bauelementen des elektronischen Heizkostenverteilers auf einer Plattenfläche der Leiterplatte angeordnet werden, wodurch die Leiterplatte einseitig bestückt werden kann. Weitere Vorteile der Erfindung ergeben sich aus der nachfolgenden Beschreibung und sind Gegenstand der abhängigen Patentansprüche. Nachfolgend wird ein Ausführungsbeispiel der Erfindung anhand der Figuren erläutert. Darin zeigen:
Figur 1a in einer Vorderansicht einen elektronischen Heizkostenverteiler gemäss der Erfindung und Figur 1b den erfindungsgemässen elektronischen Heizkostenverteiler in einer Schnittdarstellung,
Figur 2 in perspektivischer Darstellung die erfindungsgemässe Anordnung einer Leiterplatte in Bezug auf eine am Heizkörper montierbare Trägerplatte,
Figur 3 und 4 in verschiedenen Perspektiven die Leiterplatte mit Mess- und Anschlusskontakten der Temperatursensoren,
Figur 5a in einer Draufsicht die Leiterplatte und Figur 5b die Leiterplatte in einer Schnittdarstellung und
Figur 6 einen vergrösserten Ausschnitt der Leiterplatte in der Schnittdarstellung.

Einander entsprechende Elemente sind in den Figuren mit den gleichen Bezugszeichen versehen.

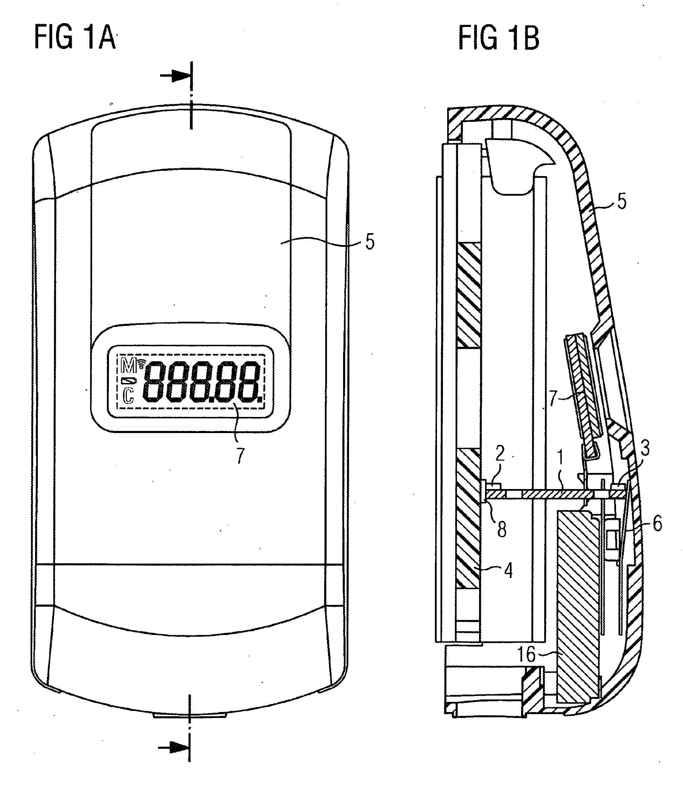

Figur 1a zeigt in einer Vorderansicht einen Heizkostenverteiler mit Gehäuse 5 und einem Display 7, welches beispielsweise die vom Heizkostenverteiler ermittelten Verbrauchsdaten anzeigt.
Figur 1b zeigt den Heizkostenverteiler, mit in Längsrichtung geschnittenem Gehäuse. Innerhalb des Gehäuses 5 befindet sich eine Leiterplatte 1, die senkrecht zu einer Trägerplatte 4 angeordnet ist, die das Gehäuse 5 rückseitig abschliesst. Die Trägerplatte 4 besteht aus einem wärmeleitfähigen Material, und ist an einer Heizkörperoberfläche montierbar. Die Leiterplatte 1 weist einen Heizkörpertemperatursensor 2 und einen Raumlufttemperatursensor 3 auf, die auf der Leiterplatte 1 in einem Abstand angeordnet sind, der in etwa der Breite der Leiterplatte 1 entspricht. Die Temperatursensoren 2 und 3 sind als SMD-Bauelemente ausgeführt, die elektrisch mit einer auf der Leiterplatte befindlichen hier nicht dargestellten elektronischen Auswerteeinheit verbunden sind, die von einer Batterie 16 gespeist wird.

Der Heizkörpertemperatursensor 2 ist z. B. über ein elektrisch isolierendes, elastisches Wärmeleitelement 8 mit der Trägerplatte 4 verbunden. Um eine gute Wärmekopplung des Heizkörpertemperatursensors 2 mit der Trägerplatte 4 zu erzielen, wird die Leiterplatte 1 auf der der Trägerplatte 4 zugewandten Stirnseite mittels einer Andruckfeder 6 in Richtung der Trägerplatte 4 gedrückt, wobei die Feder sich am Gehäuse 5 abstützt und dabei die dem Gehäuse 5 zugewandte Stirnseite der Leiterplatte 1 gegen das Gehäuse 5 drückt.
Die Feder 6 besteht z. B. aus einem wärmeleitfähigen Material, so dass die raumseitige Gehäusetemperatur über die Feder 6 zu dem Raumlufttemperatursensor 3 geleitet wird.

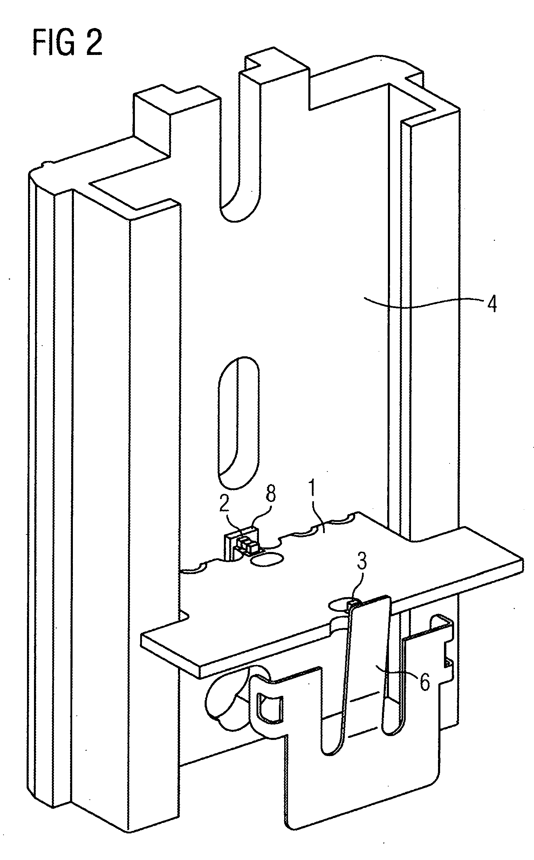

Figur 2 zeigt in perspektivischer Darstellung die senkrechte Anordnung der Leiterplatte 1 in Bezug auf die Trägerplatte 4.

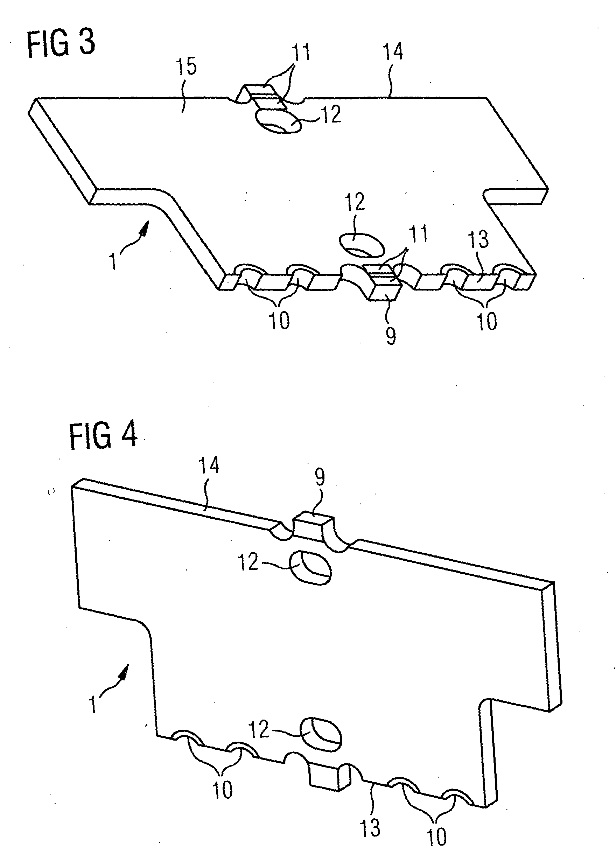

Die Figuren 3 und 4 zeigen in verschiedenen Perspektiven die Leiterplatte 1 mit Messkontakten 9, Anschlusskontakten 11 und Durchgangsöffnungen 12. Die Durchgangsöffnungen 12 dienen der thermischen Entkopplung der hier nicht dargestellten Temperatursensoren von der restlichen Leiterplatte. Die Messkontakte 9 sind auf gegenüberliegenden Stirnflächen 13 und 14 der Leiterplatte 1 angeordnet und befinden sich vorzugsweise in unmittelbarer Nähe zu den Anschlusskontakten 11, die auf der Plattenfläche 15 der Leiterplatte 1 angeordnet sind, auf der auch die Temperatursensoren positioniert werden.

Die Messkontakte 9 können z. B. durch die Herstellung eines durchkontaktierten Langloches der Leiterplatte und anschliessendem Auffräsen hergestellt werden, wodurch metallisierte Kopplungsflächen 9 erhalten werden, welche die Temperatur durch Wärmeleitung zu den Anschlusskontakten 11 leiten, die mit den Temperatursensoren elektrisch leitend verbunden sind. Weiterhin kann eine der Stirnflächen der Leiterplatte 1, z. B. die Stirnfläche 13 Kontakte 10 zur Parametrierung des Heizkostenverteilers aufweisen.

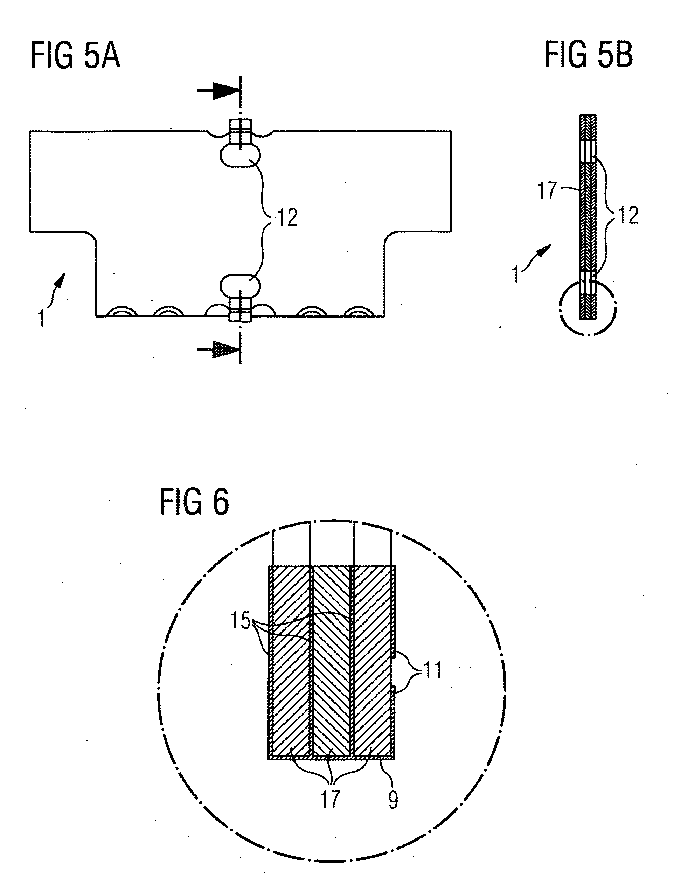

Figur 5a zeigt in einer Draufsicht schematisch die Leiterplatte 1 mit Durchgangsöffnungen 12 und in Figur 5b ist die Leiterplatte 1 in einer Schnittdarstellung dargestellt. Wie aus Figur 5b ersichtlich, ist die Leiterplatte 1 aus mehreren elektrisch isolierenden Schichten 17 aufgebaut.

Figur 6 zeigt einen vergrösserten Ausschnitt der in Figur 5b dargestellten mehrschichtigen Leiterplatte mit den Schichten 17 sowie Messkontakt 9 und Anschlusskontakt 11.
Im Bereich des Mess- und Anschlusskontaktes sind zwischen den elektrisch isolierenden Schichten 17 der Leiterplatte Wärmeleitende Bereiche 15 vorgesehen, die z. B. aus Kupfer bestehen. Die Wärmeleitenden Bereiche 15 sind vorzugsweise übereinander angeordnet und über den an der Stirnfläche der Leiterplatte befindlichen Messkontakt 9 mit einem Pol des Anschlusskontaktes 11 verbunden. Der andere Pol des Anschlusskontaktes 11 ist gegenüber den Wärmeleitenden Bereichen 15 elektrisch isoliert. Die Wärmeleitenden Bereiche sind auf die Geometrie der Temperatursensoren abgestimmt, damit eine gute und homogene Durchwärmung der mehrschichtigen Leiterplatte im Bereich der Mess- und Anschlusskontakte der Temperatursensoren erhalten wird.

## Patentansprüche

1. Heizkostenverteiler zur Erfassung der von einem Heizkörper in einem Raum abgegebenen Wärmemenge, mit einem Gehäuse (5) und einer an einer Heizkörperoberfläche montierbaren wärmeleitfähigen Trägerplatte(4), welche eine Rückwand für das Gehäuse bildet und einer innerhalb des Gehäuses (5) angeordneten Leiterplatte(1), die einen Heizkörpertemperatursensor. (2) und einen Raumlufttemperatursensor (3) aufweist, **dadurch gekennzeichnet, dass** die Leiterplatte (1) senkrecht zu der Trägerplatte(4) angeordnet ist, wobei eine Stirnfläche (13) der Leiterplatte (1), die der Trägerplatte (4) zugewandt ist, einen Messkontakt (9) für den Heizkörpertemperatursensor (2) aufweist und eine weitere Stirnfläche (14) der Leiterplatte (4) welche dem Gehäuse zugewandt ist, einen Messkontakt (9) für den Raumlufttemperatursensor (3) aufweist, wobei die Messkontakte (9) metallisierte wärmeleitfähige Kopplungsflächen für die Wärmeleitung an den Heizkörper- bzw. Raumlufttemperatursensor darstellen.

2. Heizkostenverteiler nach Anspruch 1, **dadurch gekennzeichnet, dass** die Messkontakte (9) auf gegenüber liegenden Stirnflächen (13,14) der Leiterplatte (1) angeordnet sind.

3. Heizkostenverteiler nach Anspruch 1 oder 2, **dadurch gekennzeichnet, dass** die Temperatursensoren (2, 3) Anschlusskontakte (11) aufweisen, die auf einer Plattenfläche (15) der Leiterplatte (1) in unmittelbarer Nähe zu den Messkontakten angeordnet sind.

4. Heizkostenverteiler nach Anspruch 3, **dadurch gekennzeichnet, dass** die Leiterplatte (1) aus mehreren elektrisch isolierenden Schichten (17) besteht, wobei zwischen den Schichten (17) im Bereich der Mess- und Anschlusskontakte. (9, 11) der Leiterplatte (1) Wärmeleitende Bereiche (15) vorgesehen sind, die übereinander angeordnet sind.

5. Heizkostenverteiler nach Anspruch 4, **dadurch gekennzeichnet, dass** die Wärmeleitenden Bereiche (15) über die Messkontakte (9) mit einem Pol des jeweiligen Anschlusskontaktes (11) elektrisch verbunden sind.

6. Heizkostenverteiler nach Anspruch 5, **dadurch gekennzeichnet, dass** der andere Pol des jeweiligen Anschlusskontaktes (11) gegenüber den Wärmeleitenden Bereichen (15) elektrisch isoliert ist.

7. Heizkostenverteiler nach einem der Ansprüche 1 bis 6, **dadurch gekennzeichnet, dass** Durchgangsöffnungen (12) zur thermischen Entkopplung der Mess- und Anschlusskontakte (9,11) der Temperatursensoren (2,3) von der restlichen Leiterplatte (1) vorgesehen sind.

8. Heizkostenverteiler nach einem der Ansprüche 1 bis 7, **dadurch gekennzeichnet, dass** eine der Stirnflächen (13,14) der Leiterplatte (1) Kontakte (10) zur Parametrierung des Heizkostenverteilers aufweist.

## Claims

1. Heating cost distributor for recording the amount of heat output into a room by a heating device, having a housing (5) and a thermally conductive carrier plate (4), which can be mounted on a surface of the heating device and forms a rear wall for the housing, and a printed circuit board (1) which is arranged inside the housing (5) and has a heating device temperature sensor (2) and a room air temperature sensor (3), **characterized in that** the printed circuit board (1) is arranged perpendicular to the carrier plate (4), one end face (13) of the printed circuit board (1) which faces the carrier plate (4) having a measurement contact (9) for the heating device temperature sensor (2), and a further end face (14) of the printed circuit board (4) which faces the housing having a measurement contact (9) for the room air temperature sensor (3), the measurement contacts (9) being metallized thermally conductive coupling areas for heat conduction to the heating device and room air temperature sensors.

2. Heating cost distributor according to Claim 1, **characterized in that** the measurement contacts (9) are arranged on opposite end faces (13, 14) of the printed circuit board (1).

3. Heating cost distributor according to Claim 1 or 2, **characterized in that** the temperature sensors (2, 3) have connection contacts (11) which are arranged on a board surface (15) of the printed circuit board (1) in the immediate vicinity of the measurement contacts.

4. Heating cost distributor according to Claim 3, **characterized in that** the printed circuit board (1) comprises a plurality of electrically insulating layers (17), thermally conductive regions (15) which are arranged above one another being provided between the layers (17) in the region of the measurement and connection contacts (9, 11) of the printed circuit board (1).

5. Heating cost distributor according to Claim 4, **characterized in that** the thermally conductive regions (15) are electrically connected to a pole of the respective connection contact (11) via the measurement contacts (9).

6. Heating cost distributor according to Claim 5, **characterized in that** the other pole of the respective connection contact (11) is electrically insulated with respect to the thermally conductive regions (15).

7. Heating cost distributor according to one of Claims 1 to 6, **characterized in that** through-openings (12) are provided for thermally decoupling the measurement and connection contacts (9, 11) of the temperature sensors (2, 3) from the rest of the printed circuit board (1).

8. Heating cost distributor according to one of Claims 1 to 7, **characterized in that** one of the end faces (13, 14) of the printed circuit board (1) has contacts (10) for parameterizing the heating cost distributor.

## Revendications

1. Répartiteur de frais de chauffage pour l'enregistrement de la quantité de chaleur délivrée par un élément chauffant dans un local, comprenant un boîtier (5) et une plaque support (4) conductrice de chaleur et pouvant être montée sur une surface d'élément chauffant, qui forme une paroi arrière pour le boîtier, et une plaque imprimée (1) disposée à l'intérieur du boîtier (5), qui présente un capteur de température d'élément chauffant (2) et un capteur de température d'air ambiant (3), **caractérisé en ce que** la plaque imprimée (1) est disposée perpendiculairement à la plaque support (4), une surface avant (13) de la plaque imprimée (1), qui est tournée vers la plaque support (4) présentant un contact de mesure (9) pour le capteur de température d'élément chauffant (2) et une autre surface avant (14) de la plaque imprimée (4), qui est tournée vers le boîtier, présentant un contact de mesure (9) pour le capteur de température d'air ambiant (3), les contacts de mesure (9) représentant des surfaces d'accouplement thermoconductrices métallisées pour la conduction de chaleur au capteur de température d'élément chauffant ou au capteur de température d'air ambiant.

2. Répartiteur de frais de chauffage selon la revendication 1, **caractérisé en ce que** les contacts de mesure (9) sont disposés sur des surfaces avant (13, 14) se faisant face de la plaque imprimée (1).

3. Répartiteur de frais de chauffage selon la revendication 1 ou 2, **caractérisé en ce que** les capteurs de température (2, 3) présentent des contacts de raccordement (11) qui sont disposés sur une plaque de surface (15) de la plaque imprimée (1) à proximité immédiate des contacts de mesure.

4. Répartiteur de frais de chauffage selon la revendication 3, **caractérisé en ce que** la plaque imprimée (1) est composée de plusieurs couches (17) électro-isolantes, des zones (15) thermoconductrices étant prévues entre les couches (17) dans la zone des contacts de mesure et de raccordement (9, 11) de la plaque imprimée (1), lesquelles zones sont disposées les unes au-dessus des autres.

5. Répartiteur de frais de chauffage selon la revendication 4, **caractérisé en ce que** les zones (15) thermoconductrices sont reliées électriquement par les contacts de mesure (9) à un pôle du contact de raccordement (11) respectif.

6. Répartiteur de frais de chauffage selon la revendication 5, **caractérisé en ce que** l'autre pôle du contact de raccordement (11) respectif est isolé électriquement par rapport aux zones (15) thermoconductrices.

7. Répartiteur de frais de chauffage selon l'une quelconque des revendications 1 à 6, **caractérisé en ce que** des ouvertures de passage (12) sont prévues pour la dissociation thermique des contacts de mesure et de raccordement (9, 11) des capteurs de température (2, 3) de la plaque imprimée (1) restante.

8. Répartiteur de frais de chauffage selon l'une quelconque des revendications 1 à 7, **caractérisé en ce que** l'une des surfaces avant (13, 14) de la plaque imprimée (1) présente des contacts (10) pour le paramétrage du répartiteur de frais de chauffage.
